# EUROPÄISCHE PATENTSCHRIFT

(11) **EP 0 683 878 B1**
(45) Veröffentlichungstag und Bekanntmachung des Hinweises auf die Patenterteilung: **11.09.1996**
(21) Anmeldenummer: 94905048.8
(22) Anmeldetag: 13.01.1994
(51) Int. Cl.: F16K 24/04, F16K 31/24

(54) **ENTLÜFTUNGSVENTIL**
AIR BLEED COCK
SOUPAPE POUR MISE A L'AIR LIBRE

(30) Priorität: 10.02.1993 DE 4303799
(43) Veröffentlichungstag der Anmeldung: 29.11.1995
(73) Patentinhaber: HYDAC TECHNOLOGY GMBH, 66273 Sulzbach (DE)
(72) Erfinder: MERTENS, Helmut, D-66119 Saarbrücken (DE)
(74) Vertreter: Patentanwälte Bartels, Held und Partner
(86) Internationale Anmeldenummer: EP9400082
(87) Internationale Veröffentlichungsnummer: WO9418480

(56) Entgegenhaltungen:
- DE-A- 2 241 645
- DE-U- 7 738 268
- FR-A- 2 032 552

## Beschreibung

Die Erfindung betrifft ein Entlüftungsventil mit einem in einem Ventilgehäuse bewegbaren Schwimmer, der einen Hebeltrieb aufweist, der zum Öffnen und Schließen einer Auslaßöffnung mit einem Ventilteller versehen ist, der mit einem Kraftspeicher zusammenwirkt, wobei der Ventilteller mittels des Hebeltriebes eine Kippbewegung ausführt, die in einem kontinuierlichen Verlauf die Auslaßöffnung auf- oder zusteuert.

Dahingehende Entlüftungsventile, die automatisch arbeiten, werden eingesetzt, um während des Betriebes Luft aus Anlagen zu entfernen, in denen ein Fluid strömt, und beim Anfahren einer dahingehenden Anlage eingeschlossene Luft entweichen zu lassen. Handelsübliche Entlüftungsventile, wie sie beispielsweise in Heizungsanlagen Verwendung finden, sind meist für Betriebsdrücke bis maximal 7 bar ausgelegt und daher für den Einsatz in Hydraulikanlagen, wo in der Regel höhere Drücke auftreten, ungeeignet.

Eine Vielzahl dieser Entlüfter arbeitet mit Schwimmern, die durch das Betriebsmedium bewegt werden und die über eine Mechanik ein Ventil betätigen, um die eingeschlossene Luft ins Freie abzuleiten. Dabei werden entweder Kräfte durch den Schwimmerauftrieb oder durch das Schwimmereigengewicht genutzt. Bei einem Einsatz der genannten Entlüfter in Hydraulikanlagen ergeben sich durch die geringere Dichte der Betriebsmedien deutlich geringere verfügbare Stellkräfte für die Betätigung der Öffnungsmechanik, was zu Störungen führt. Insbesondere kommt es bis zum vollständigen Schließen der bekannten Entlüftungsventile bei einem Einsatz auf dem Hydraulikgebiet zu einem ungewollten Austritt von mit Betriebsmedium versehener Luft, vergleichbar einem Aerosol, in die Umgebung, was zu einer Gesundheitsgefährdung der mit der Überwachung dahingehender Hydraulikanlagen betrauter Bedienpersonen führt.

Bei einem gattungsfremden Entlüftungsventil gemäß dem deutschen Gebrauchsmuster 77 38 268 hebt der Schwimmer mittels des Hebeltriebes den Ventilteller vollständig von der Auslaßöffnung ab und ein großer linearer, in einer Ebene liegender Verfahrweg des Ventiltellers ist notwendig, bis ein vollständiger Schließvorgang erreicht ist. Dies führt zu einem groß aufbauenden Entlüftungsventil. Neben dem bereits angesprochenen ungewollten Aerosolaustritt geht der Schließvorgang nicht kontrolliert vonstatten, so daß ein Fluidaustritt aus der Auslaßöffnung in die Umgebung möglich ist und beim Öffnen kann es zu Hemmungen kommen, die den Öffnungsvorgang erschweren oder gar unmöglich machen.

Bei einem gattungsgemäßen Entlüftungsventil nach der DE-OS 22 41 645 ist der Hebeltrieb aus einer in der Schließstellung des Ventiltellers horizontal angeordneten Ventilstange gebildet, die mittels eines kugelförmigen Schwimmers den scheibenartigen ebenen Ventilteller durch Verschwenken zwecks Öffnen und Verschließen einer kegelförmigen Auslaßöffnung bewegt. Aufgrund der notwendigerweise hohen Betätigungskräfte für den Hebeltrieb baut der bekannte Schwimmer groß auf, was in Verbindung mit dem querliegenden Hebelgestänge insgesamt zu einem ebenfalls groß aufbauenden Entlüftungsventil führt. Da der Ventilteller aus einer ebenen Platte gebildet ist, der sich in Abhängigkeit von den Druckkräften nur schwer von der Auslaßöffnung wegbewegen läßt, kann es auch hier zu Hemmungen im Bereich des Hebeltriebes und mithin zu Funktionsbeeinträchtigungen des Entlüftungsventiles kommen.
Ausgehend von diesem Stand der Technik liegt der Erfindung die Aufgabe zugrunde, ein klein aufbaubares Entlüftungsventil zu schaffen, das die oben beschriebenen Nachteile nicht aufweist und das auch für Anwendungsfälle vorgesehen sein kann, bei denen sowohl höhere Drücke als auch Medien niedrigerer Dichte vorherrschen.

Eine dahingehende Aufgabe löst ein Entlüftungsventil mit den Merkmalen des Anspruches 1. Dadurch, daß gemäß dem kennzeichnenden Teil des Anspruches 1 der Hebeltrieb des Entlüftungsventiles aus einer Kulisse gebildet ist, deren Hebel an einem Ende den Ventilteller trägt und mit dem anderen Ende drehbar in einer Führung des Schwimmers geführt ist, und der Ventilteller mit mindestens einem der Auslaßöffnung zugekehrten Überstand jeweils einen Drehpunkt bildet, um den der Ventilteller kippbar ist, ist unabhängig von den am Ventilteller anstehenden Druckkräften die die Auslaßöffnung freigebende Kippbewegung gewährleistet, so daß ein sicheres Öffnen und Schließen und damit ein sicherer Betrieb des Entlüftungsventiles garantiert ist. Ferner ist ein ungewollter Aerosolaustritt ebenso wie ein Flüssigkeitsaustritt vermieden, denn durch die angesprochene Bewegung ist das Ventil bei entsprechender Ansteuerung jederzeit sofort in der Lage, den Schließvorgang kurzfristig vorzunehmen. Durch den Kulissentrieb und das definierte Verschwenken des Ventiltellers um mindestens einen Drehpunkt lassen sich alle wesentlichen Funktionen des Entlüftungsventiles auf kleinstem Raum zusammenfassen, was insgesamt zu einem klein aufbauenden Entlüftungsventil führt.

Aufgrund der Zwangsführung des Ventiltellers durch den Kulissentrieb ist der sichere Betrieb des Entlüftungsventiles auch in jeder Einbaulage gewährleistet, d.h. ein Öffnen des Ventiles erfolgt nur, wenn die Austrittsöffnung nach oben weist, in anderen Lagen des Entlüfters bleibt die Öffnung sicher verschlossen, so daß immer mit Sicherheit ein ungewolltes Austreten von Betriebsmedium ausgeschlossen ist, was bei den bekannten Lösungen nicht der Fall ist.

Bei einer bevorzugten Ausführungsform des erfindungsgemäßen Entlüftungsventiles ist die Führung aus einem den Schwimmer durchgreifenden Schlitz gebildet, der einen Führungskanal zum Führen des drehbaren Endes des Hebels aufweist und der schräg angeordnet in Längsrichtung des Schwimmers verläuft. Hierdurch ist ein Großteil des Hebels in jeder Stellung des Schwimmers vollständig in diesem geführt und eine sichere, hemmfreie Führung des Hebels gewährleistet.

Bei einer weiteren bevorzugten Ausführungsform des erfindungsgemäßen Entlüftungsventiles weist der Schwimmer an seiner der Auslaßöffnung abgekehrten Seite ein Sitzventil auf, das dichtend das Innere des Ventilgehäuses gegenüber einer Anschlußbohrung für das Befestigen des Entlüftungsventiles abschließt. Dank dieser Anordnung ist bei geöffneter Entlüftungsöffnung in Form der Anschlußöffnung gewährleistet, daß kein Fluid in das Innere des Ventilgehäuses und mithin in die angeschlossenen Anlagenteile unbeabsichtigt gelangen kann.

Bei einer besonders bevorzugten Ausführungsform des erfindungsgemäßen Entlüftungsventiles weist das Sitzventil eine zapfenartige Verlängerung mit mindestens einer Anschlußöffnung auf, die zumindest teilweise in Deckung mit einer Entlüftungsöffnung im Ventilgehäuse bringbar ist, die in einer Belüftungsstellung des Ventiles die Umgebung mit dem Inneren der zapfenartigen Verlängerung verbindet. Auf diese Art und Weise läßt sich, ohne, wie bei den bekannten Lösungen, weitestgehend das Entlüftungsventil aus seiner Anschlußbohrung entfernen zu müssen, eine Belüftung der an das Entlüftungsventil angeschlossenen Anlagenteile erreichen.

Bei einer weiteren besonders bevorzugten Ausführungsform des erfindungsgemäßen Entlüftungsventiles ist der Ventilteller an der Stelle der Auslaßöffnung mit einer kegelförmigen Spitze versehen, die zum kontinuierlichen Öffnen und Schließen der Auslaßöffnung in diese derart eingreift, daß der kontinuierliche Verlauf eine progressive Charakteristik hat. Dies begünstigt wiederum den hemmfreien Betrieb mit nur geringen Betätigungskräften, was einer geringen Schwimmergröße zugute kommt. Vorzugsweise ist der Kraftspeicher aus einer Druckfeder gebildet, die sich mit ihrem einen Ende am Ventilteller und mit ihrem anderen Ende am Ventilgehäuse abstützt. Durch geeignete Wahl der entsprechenden Federvorspannkraft der Druckfeder wird erreicht, daß ein unbeabsichtigtes Öffnen der gegebenenfalls düsenartigen Auslaßöffnung bei niedrigem Innendruck ausgeschlossen ist. Gleichzeitig verhindert die Feder ein Öffnen der Auslaßöffnung, wenn der Entlüfter nicht senkrecht steht. Dadurch ist sichergestellt, daß es beispielsweise bei Fehllagen des Gerätes nicht zu Leckagen kommt.

Bei einer weiteren besonders bevorzugten Ausführungsform des erfindungsgemäßen Entlüftungsventiles mündet die Auslaßöffnung in ein filterndes Element, das vorzugsweise aus einzelnen Siebscheiben gebildet ist. Hierdurch wird verhindert, daß Schmutz in das Ventilgehäuse eindringen kann und die Funktion des erfindungsgemäßen Ventiles beeinträchtigt.

Im folgenden wird das erfindungsgemäße Entlüftungsventil anhand der Zeichnung näher erläutert.

Es zeigen:

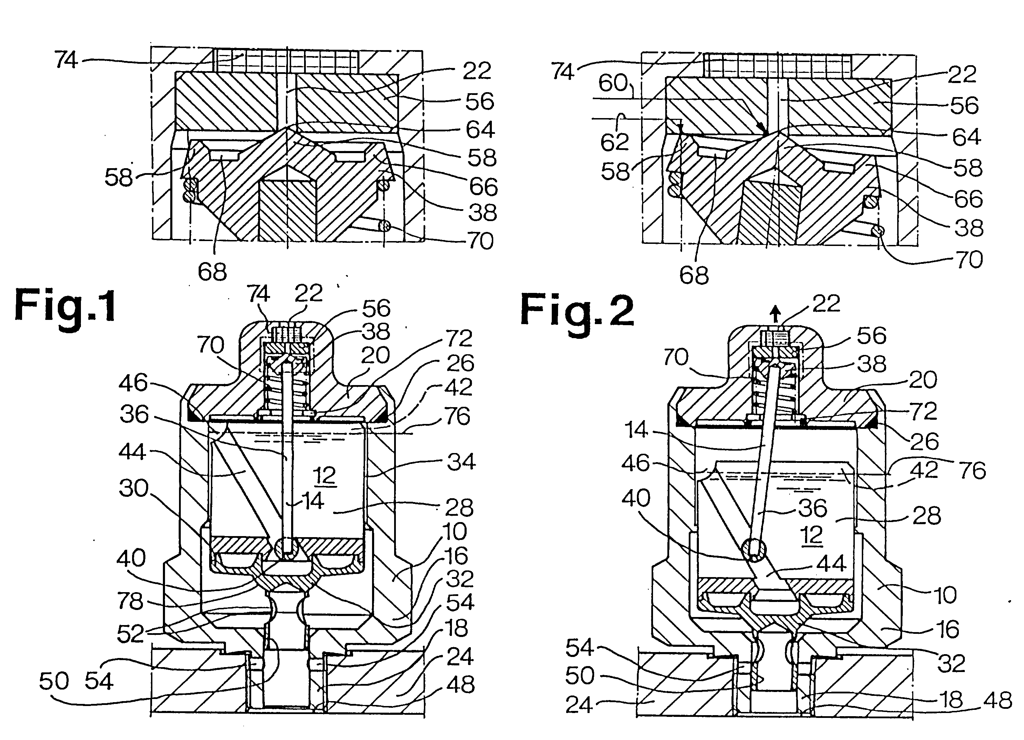

- Fig.1 bis 4: verschiedene Schaltdarstellungen des Entlüftungsventiles, das im Längsschnitt dargestellt ist, wobei die oberen Darstellungen Detailvergrößerungen der bezeichneten Bereiche des Entlüftungsventiles sind.

Das Entlüftungsventil besteht im wesentlichen aus einem Gehäuse 10, einem Schwimmer 12 und einem als Ganzes mit 14 bezeichneten Hebeltrieb. Das Entlüftergehäuse 10 besteht aus einem Gehäuseunterteil 16 mit Einschraubzapfen 18 und einem aufgesetzten Gehäuseoberteil 20 mit einer Auslaßöffnung 22. Das Entlüftungsventil wird über den Einschraubzapfen 18 mit Außengewinde in ein zu entlüftendes Filtergehäuse 24 eingeschraubt und dichtet das Innere des Filtergehäuses 24 gegenüber der Umgebung über eine Dichtkante ab. Anstelle des Filtergehäuses könnte auch eine fluidführende Leitung treten, die man entlüften möchte. Zwischen Gehäuseunterteil 16 und deckelartigem Oberteil 20 ist eine Dichtung 26 eingelegt und der überstehende Rand des Unterteiles 16 ist an dieser Stelle nach innen gebördelt.

Der Schwimmer 12 weist an seinem der Auslaßöffnung 22 zugekehrten Oberteil 28 eine zylindrische Außenumfangsfläche auf, an die sich das dem Einschraubzapfen zugewandte Schwimmerunterteil 30 einstückig anschließt, das an seiner Unterseite ein Sitzventil 32 aufweist. Von dem Außenumfang des Schwimmers 12 und dem Innenumfang des Gehäuses 10 begrenzt ist ein Spalt 34 gebildet, der sich in einem dem Filtergehäuse 24 zugewandten Bereich im Durchmesser geringfügig erweitert. Über den angesprochenen Spalt 34 kann die abzuführende Luft in den Gehäuseinnenbereich zwischen Oberseite des Schwimmers 12 und Auslaßöffnung 22 gelangen.

Der bereits angesprochene Hebeltrieb 14 ist aus einer Kulisse gebildet, deren Hebel 36 in Form einer Ventilstange an einem Ende und fest mit diesem verbunden ein Schließglied in Form eines Ventiltellers 38 trägt, und mit dem anderen Ende über eine Kugel 40 drehbar in einer Führung des Schwimmers 12 geführt ist. Die Führung ist aus einem, das zylindrische Schwimmeroberteil 28 durchgreifenden, mittig angeordneten Längsschlitz 42 gebildet, der in der Zeichenebene verläuft und der einen Führungskanal 44 zum Führen des drehbaren Endes 40 des Hebels 36 aufweist und der, wie insbesondere die Zeichnung zeigt, von der Mitte des Schwimmeroberteils 28 an seiner Unterseite schräg nach oben zur Oberseite des Schwimmers 12 verläuft und dort in einer entsprechenden Öffnung 46 mündet.

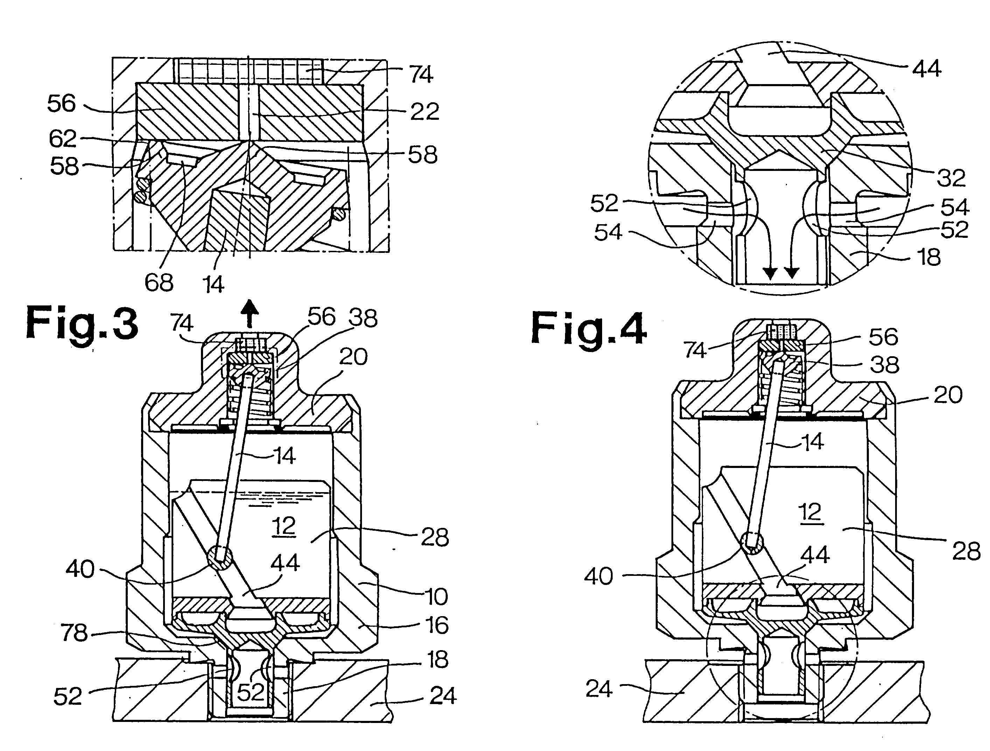

Das Sitzventil 32, das in Richtung der Längsachse des Schwimmers 12 an dessen Unterseite angeordnet ist, schließt dichtend das Innere des Ventilgehäuses 10 gegenüber einer Anschlußbohrung 48 mit Außengewinde ab, in die für das Befestigen des Entlüftungsventils auf der Oberseite des Filtergehäuses 24 der Einschraubzapfen 18 eingreift. Das Sitzventil 32 weist eine zapfenartige Verlängerung 50 auf, die mit zwei querliegend und diametral einander gegenüberliegend angeordneten Anschlußöffnungen 52 versehen ist, die mit jeweils einer Entlüftungsöffnung 54 im Einschraubzapfen 18 des Ventilgehäuses 10 in Deckung bringbar ist, die in einer Belüftungsstellung des Ventiles die Umgebung mit dem Inneren der zapfenartigen Verlängerung 50 bzw. mit dem Inneren des Einschraubzapfens 18 verbindet, was in der Fig.4 dargestellt ist und was eintritt, sobald das Entlüftungsventil durch einige Schraubbewegungen vom Filtergehäuse 24 abgehoben ist.

Die Auslaßöffnung 22 ist Teil einer scheibenförmigen Düse 56, die in das Gehäuseoberteil 20 eingesetzt ist. Diese Düse 56 bildet mit mindestens einem der Auslaßöffnung 22 zugekehrten Überstand 58 des Ventiltellers 38 jeweils einen Drehpunkt 60,62 aus, um den der Ventilteller 38 nach einer Seite hin kippbar ist. Zur Erzeugung des ersten Dreh- oder Kippunktes 60 weist der Ventilteller 38 an der Stelle der Auslaßöffnung 22 als Überstand 58 eine kegelförmige Spitze 64 auf, die beim Schließen der Auslaßöffnung 22 zunehmend in diese eingreift. Ohne Funktionsverlust könnte aber an die Stelle der Spitze 64 auch eine sphärische Erhebung (nicht dargestellt) treten. Zur Herstellung des weiteren zweiten Dreh- oder Kippunktes 62 ist als Überstand 58 der Ventilrand 66 vorgesehen, der auf seiner der Düsenplatte 56 zugekehrten Seite abgeplattet ist und beim Öffnen der Auslaßöffnung 22 (s.Fig.4) nach dem Verlassen des ersten Drehpunktes 60 bei fortschreitender Kippbewegung des Hebels 36 in Anlage mit der Düse 56 kommt. Zwischen dem Ventilrand 66 und der Spitze 64 ist eine umlaufende Ringnut 68 am Ventilteller 38 vorgesehen. Die Dreh- und Kippachsen von Ventilteller 38 und dem kegelförmigen Ende 40 des Hebels 36 verlaufen parallel zueinander.

Als Kraftspeicher, der für das Zusammenwirken mit dem Ventilteller 38 vorgesehen ist, wird eine Druckfeder 70 eingesetzt, die sich mit ihrem einen Ende am Ventilteller 38 selbst und mit ihrem anderen Ende am Ventilgehäuse 10 abstützt. Für letzteres ist eine ringförmige Scheibe in das Gehäuse 10 eingebördelt. Wie insbesondere die Detailzeichnungen zeigen, mündet die Auslaßöffnung 22 auf ihrer der Umgebung zugewandten Seite in ein filterndes Element, das vorzugsweise aus einzelnen Siebscheiben 74 gebildet ist.

Zur Betätigung der Ventilmechanik wird bei der erfindungsgemäßen Lösung die Gewichtskraft des Schwimmers genutzt. Der Auftrieb des Schwimmers muß dabei lediglich ein "Schweben" bewirken. Aus diesem Grunde ist das spezifische Gewicht des Schwimmers derart gewählt, daß dieses nur geringfügig unterhalb dessen des Betriebsmediums liegt. Der Schwimmer ist hierbei vorzugsweise aus einem Kunststoffmaterial im Spritzgießverfahren hergestellt. Bekannte Konstruktionen hingegen, die die Auftriebskraft des Schwimmers zur Betätigung der Ventilmechanik unmittelbar nutzen, erfordern hingegen eine große Dichtedifferenz zwischen Schwimmkörper und Betriebsmedium, was nur durch großvolumige Hohlkörper zu erreichen ist, mit der Folge, daß ein großes Bauvolumen des gesamten Entlüfters entsteht.

Bei der erfindungsgemäßen Lösung wird die Gewichtskraft durch den Hebeltrieb 14 zweifach übersetzt, wobei die geneigte Führungsbohrung 44 im Schwimmer 12 eine Keilwirkung am Schließteil hervorruft, die durch die Länge des Hebels 36 geteilt durch den Tangens des Neigungswinkels des Hebels 36 in jeder seiner einnehmbaren Stellungen bestimmt ist. Das Hebelverhältnis um den ersten Drehpunkt 60 wird größer als der Faktor 100 durch die Länge des Hebels 36 gewählt und ergibt sich aus dieser Hebellänge im Verhältnis zum Auslaßöffnungshalbmesser. Das Hebelverhältnis um den zweiten Drehpunkt 62 wiederum, der größer als der Faktor 10 durch die Länge des Hebels 36 gewählt ist, ergibt sich aus dieser Hebellänge zum Außenradius des Ventiltellers 38.

An der Düsenöffnung bzw. der Auslaßöffnung 22 selbst wirken bei einem Überdruck im Gehäuse, beispielsweise in Form des Filtergehäuses 24 oder einer fluidführenden Leitung, die folgenden Kräfte:
1. Druckkraft aus Fläche der Auslaßöffnung x Innendruck,
2. Federvorspannkraft der Druckfeder 70 und
3. Stellkraft des Hebeltriebes 14.

Die erstgenannte Druckkraft und die zweitgenannte Federvorspannkraft wirken schließend auf das Ventil, wohingegen die drittgenannte Stellkraft dagegen und damit öffnend auf das Entlüftungsventil wirkt. Bei hohem Innendruck ist bei den bekannten handelsüblichen Entlüftern mit gewichtsbetätigter Ventilmechanik die verfügbare Stellkraft nicht groß genug, um mit Sicherheit eine Öffnung des Entlüftungsventils zu bewirken. Andererseits reicht bei auftriebsbetätigten Entlüftern die Andruckkraft der Ventilmechanik grundsätzlich nicht aus, um die Auslaßöffnung bei niedrigem Innendruck zuverlässig geschlossen zu halten. Durch die bei dem erfindungsgemäßen Entlüftungsventil vorgenommene Abstimmung des Schwimmergewichts und seines Volumens auf Betriebsmedien mit einer Dichte unter 1 g je ml und die Auslegung der Ventilmechanik in Form des Hebeltriebes 14 treten diese Probleme nicht auf.

Im folgenden wird die Funktion des erfindungsgemäßen Entlüftungsventils anhand der einzelnen Schaltdarstellungen in der Zeichnung näher erläutert.

### A Entlüften während des Betriebes.

Bei mit Betriebsmedium (Fluid) gefüllter Schwimmerkammer befindet sich, wie die Fig.1 zeigt, der Schwimmer 12 in seiner höchsten Lage. Der Ventilhebel 36 steht senkrecht und die vorgespannte Druckfeder 70 drückt den Ventilteller 38 unmittelbar gegen die Auslaßöffnung 22 der Düse 56. Die Kegelspitze 64 verschließt mithin diese Öffnung.

Sinkt der Flüssigkeitsspiegel, der in der Zeichnung mit einer strichlinierten Linie 76 angegeben ist, innerhalb des Gehäuses 10 durch aufsteigende Luft, so bewegt sich der Schwimmer 12 nach unten. Dabei wird das kugelige Ende 40 des Ventilhebels 36 durch die Führung 42 in der geneigten Bohrung 44 seitlich verschoben. Dadurch kippt der Ventilhebel 38 um den ersten Drehpunkt 60 an der Stelle seiner kegelförmigen Spitze 64 so lange, bis der Ventilteller 38 mit seinem Rand 66 an der Unterseite der Düse 56 anliegt und mithin der zweite Drehpunkt 62 gebildet ist. Die dahingehende Schaltsituation ist in der Fig.2 dargestellt.

In dieser Stellung ist der Dichtkegel 64 bereits vollständig von seinem Sitz abgehoben und eingeschlossene Luft kann ins Freie entweichen. Der Schwimmer 12 wird dann anschließend durch den steigenden Flüssigkeitsspiegel 76 wieder angehoben und die Düsenöffnung 22 wird verschlossen, noch bevor Flüssigkeit austreten kann.

Sinkt der Flüssigkeitsspiegel 76 durch eine größere Luftmenge noch weiter ab, so kippt der Ventilhebel 36 zunächst in der oben beschriebenen Weise bis zum Erreichen des zweiten Drehpunktes 62 und dann weiter um diesen, wobei die Kegelspitze weiter aus der Auslaßöffnung 22 herausgeschwenkt wird. Die Kegelform der Spitze 64 bewirkt mithin eine stark progressive Zunahme des freien Querschnitts der Düsenöffnung (s.Fig.3).

Die Unterseite des Schwimmers 12, die das Sitzventil 32 aufweist, verfügt über eine ballige Dichtfläche 78, so daß die Anschlußbohrung 48 im Filtergehäuse 24 mit Sicherheit dichtend verschlossen wird, sobald der Schwimmer 12 seine unterste in der Fig.3 dargestellte Stellung einnimmt. Dadurch wird verhindert, daß unbeabsichtigt Luft von außen durch das Entlüftungsventil in das Filtergehäuse 24 gelangen kann. Damit ist aber auch ein unbeabsichtigtes Leerlaufen des Filtergehäuses 24 ausgeschlossen.

### B Entlüften beim Anfahren der Anlage.

Wird eine Filteranlage in Betrieb genommen, so ist in der Regel eine beträchtliche Menge Luft in den Filtergehäusen 24 enthalten. Um diese Luft zu entfernen, wird das erfindungsgemäße Entlüftungsventil an einem erhöhten Punkt der jeweiligen Anlage angebracht. Bei luftgefüllter Schwimmerkammer liegt der Schwimmer 12 auf dem Gehäuseunterteil 16 auf und verschließt die Anschlußbohrung 48 (s.Fig.3). Das kugelige Ende 40 des Ventilhebels 36 ist durch die Führung in der geneigten Bohrung 44 des Schwimmeroberteiles 28 seitlich ausgelenkt. Der Ventilteller 38 liegt an seinem zweiten Drehpunkt 62 an der Unterseite der scheibenförmigen Düse 56 an. Die Entlüftungsöffnung in Form der Auslaßöffnung 22 selbst ist geöffnet. Steigt der Innendruck im Filtergehäuse 24 dann nur geringfügig über den herrschenden Außendruck an, so hebt er den Schwimmer 12 an und die unter Druck stehende Luft gelangt in die Schwimmerkammer, also in das Innere des Gehäuses 10 und von dort durch die geöffnete Auslaßöffnung 22 in die Umgebung. Auf diese Weise wird die Luft aus dem Filtergehäuse 24 entfernt, bis der Flüssigkeitsspiegel 76 den Schwimmer 12 erreicht und anhebt. Durch das Steigen des Schwimmers 12 wird das kugelige Ende 40 des Ventilhebels 36 zur Mittelachse hin verschoben, wobei der Ventilhebel 36 um den zweiten Drehpunkt 62 verschwenkt bzw. kippt. Dies setzt sich fort, bis die kegelförmige Spitze 64 des Ventiltellers 38 in der Auslaßöffnung 22 am ersten Drehpunkt 60 anliegt (s.Fig.2). Dann kippt der Ventilhebel 36 weiter um diesen ersten Drehpunkt 60, bis die Auslaßöffnung 22 vollständig verschlossen ist (s.Fig.1). Das Schließen der Auslaßöffnung 22 erfolgt also, bevor der Flüssigkeitsspiegel 76 eine Höhe innerhalb des Gehäuses 10 erreichen kann, bei der ein ungewollter Flüssigkeitsaustritt erfolgen würde.

### C Belüften des Filtergehäuses.

Soll das Filtergehäuse 24 belüftet werden, um das Betriebsmedium abzulassen oder um einen Druckausgleich mit dem Umgebungsdruck herzustellen, so wird das Entlüftungsventil mittels einiger Umdrehungen aus der Anschlußbohrung 48 herausgedreht, so daß über die Entlüftungsöffnungen 54 und die Anschlußöffnungen 52 in der zapfenartigen Verlängerung 50 die Außenluft eindringen kann (s.Fig.4). Vorzugsweise wird zum Ein- und Ausschrauben des Entlüftungsventiles das Gehäuseunterteil 16 mit einem Außensechskant versehen.

## Patentansprüche

1. Entlüftungsventil mit einem in einem Ventilgehäuse (10) bewegbaren Schwimmer (12), der einen Hebeltrieb (14) aufweist, der zum Öffnen und Schließen einer Auslaßöffnung (22) mit einem Ventilteller (38) versehen ist, der mit einem Kraftspeicher (70) zusammenwirkt, wobei der Ventilteller (38) mittels des Hebeltriebes (14) eine Kippbewegung ausführt, die in einem kontinuierlichen Verlauf die Auslaßöffnung (22) auf- oder zusteuert, dadurch gekennzeichnet, daß der Hebeltrieb (14) aus einer Kulisse gebildet ist, deren Hebel (36) an einem Ende den Ventilteller (38) trägt und mit dem anderen Ende (40) drehbar in einer Führung des Schwimmers (12) geführt ist, und daß der Ventilteller (38) mit mindestens einem der Auslaßöffnung (22) zugekehrten Überstand (58) jeweils einen Drehpunkt (60,62) bildet, um den der Ventilteller (38) kippbar ist.

2. Entlüftungsventil nach Anspruch 1, dadurch gekennzeichnet, daß die Führung aus einem den Schwimmer (12) durchgreifenden Schlitz (42) gebildet ist, der einen Führungskanal (44) zum Führen des drehbaren Endes (40) des Hebels (36) aufweist und der schräg angeordnet in Längsrichtung des Schwimmers (12) verläuft.

3. Entlüftungsventil nach Anspruch 1 oder 2, dadurch gekennzeichnet, daß der Schwimmer (12) an seiner der Auslaßöffnung (22) abgekehrten Seite ein Sitzventil (32) aufweist, das dichtend das Innere des Ventilgehäuses (10) gegenüber einer Anschlußbohrung (48) für das Befestigen des Entlüftungsventiles abschließt.

4. Entlüftungsventil nach Anspruch 3, dadurch gekennzeichnet, daß das Sitzventil (32) eine zapfenartige Verlängerung (50) mit mindestens einer Anschlußöffnung (52) aufweist, die zumindest teilweise in Deckung mit einer Entlüftungsöffnung (54) im Ventilgehäuse (10) bringbar ist, die in einer Belüftungsstelle des Ventiles die Umgebung mit dem Inneren der zapfenartigen Verlängerung (50) verbindet.

5. Entlüftungsventil nach einem der Ansprüche 1 bis 4, dadurch gekennzeichnet, daß der Ventilteller (38) an der Stelle der Auslaßöffnung (22) mit einer kegelförmigen Spitze (64) versehen ist, die zum kontinuierlichen Öffnen und Schließen der Auslaßöffnung (22) in diese derart eingreift, daß der kontinuierliche Verlauf eine progressive Charakteristik hat.

6. Entlüftungsventil nach einem der Ansprüche 1 bis 5, dadurch gekennzeichnet, daß der Kraftspeicher aus einer Druckfeder (70) gebildet ist, die sich mit ihrem einen Ende am Ventilteller (38) und mit ihrem anderen Ende am Ventilgehäuse (10) abstützt.

7. Entlüftungsventil nach einem der Ansprüche 1 bis 6, dadurch gekennzeichnet, daß die Auslaßöffnung (22) in ein filterndes Element mündet, das vorzugsweise aus einzelnen Siebscheiben (74) gebildet ist.

## Claims

1. A bleed valve including a float (12) floating in a valve chamber (10), including an actuating lever (14) for opening and closing an outlet (22), including a valve disc (38) combined with an accumulator (70), with the valve disc (38) performing a tilting motion by means of the actuating lever (14), opening or closing the outlet (22) in a continuous cycle, wherein the actuating lever (14) is formed by a crank, the lever (36) of which is supporting a valve disc (38) on one end, being rotatably guided in a guide of the float (12) at the other end (40) and the valve disc (38) being tiltable by at least one projection (58) facing the outlet (22), forming a fulcrum (60, 62), around a valve disc (38).

2. A bleed valve according to Claim 1, wherein a guide is formed by a slot (42) through the float (12) including a guide channel (44) for guiding the rotating end (40) of the lever (36) and provided in an oblique position in longitudinal direction of the float (12).

3. A bleed valve according to Claims 1 or 2, wherein the float (12) includes a seat valve (32) on the side facing away from the outlet (22), sealing the interior of the valve chamber (10) against a connecting bore (48) for assembly of the bleed valve.

4. A bleed valve according to Claim 3, wherein the seat valve (32) includes a journal-type extension (50) having at least one port (52), being at least partially congruent with a bleed outlet (54) in the valve chamber (10), connecting the area around a valve bleed point with the interior of a journal-type extension (50).

5. A bleed valve according to one of Claims 1 to 4, wherein a valve disc (38) is provided with a cone-shaped point (64) at the outlet (22) engaging into the outlet (22), for continuously opening and closing the same, allowing the continuous cycle to have a progressive characteristic.

6. A bleed valve according to one of Claims 1 to 5, wherein the accumulator consists of a compression spring (70) supported at one end by a valve disc (38) and on the valve chamber (10) by the other.

7. A bleed valve according to one of Claims 1 to 6 wherein the outlet (22) ends in a filtering unit, preferably consisting of individual screening discs (74).

## Revendications

1. Soupape de mise à l'air libre équipée d'un flotteur (12) mobile dans une cage de soupape (10) , lequel flotteur présente une transmission par levier (14) dotée pour l'ouverture et la fermeture d'un orifice de sortie (22) d'une tête de soupape (38) qui agit de concert avec un accumulateur d'énergie (70), la tête de soupape (38) exécutant au moyen de la transmission par levier (14) un mouvement basculant qui commande l'ouverture et la fermeture de l'orifice de sortie (22) dans un tracé continu, caractérisée en ce que la transmission par levier (14) est formée par une coulisse dont le levier (36) porte la tête de soupape (38) à une extrémité et est guidée avec l'autre extrémité (40) de façon pivotante dans un guide du flotteur (12), et en ce que la tête de soupape (38) forme avec au moins une saillie (58) tournée vers l'orifice de sortie (22) respectivement un point de rotation (60,62) autour duquel la tête de soupape peut basculer.

2. Soupape de mise à l'air selon la revendication 1, caractérisée en ce que le guide est formé par une fente (42) traversant le flotteur (12), fente qui présente un canal de guidage (44) pour guider l'extrémité (40) pivotante du levier (36) et est disposée obliquement dans le sens longitudinal du flotteur (12).

3. Soupape de mise à l'air selon la revendication 1 ou 2, caractérisée en ce que le flotteur (12) présente sur sa face opposée à l'orifice de sortie (22) une soupape à siège (32) qui ferme de façon étanche l'intérieur de la cage de soupape (10) par rapport à un alésage de raccordement (48) pour la fixation de la soupape de mise à l'air.

4. Soupape de mise à l'air selon la revendication 3, caractérisée en ce que la soupape à siège (32) présente un prolongement (50) en forme de tenon avec au moins un orifice de raccordement (52) qui peut être amené au moins partiellement en recouvrement avec un orifice de mise à l'air (54) situé dans la cage de soupape (10), lequel orifice relie l'environnement avec l'intérieur du prolongement (50) en forme de tenon dans un endroit de ventilation de la soupape.

5. Soupape de mise à l'air selon l'une quelconque des revendications 1 à 4, caractérisée en ce que la tête de soupape (38) est dotée à l'endroit de l'orifice de sortie (22) d'une pointe (64) conique qui, pour l'ouverture et la fermeture continues de l'orifice de sortie (22), s'engage dans celle-ci de telle façon que le tracé continu ait une caractéristique progressive.

6. Soupape de mise à l'air selon l'une quelconque des revendications 1 à 5, caractérisée en ce que l'accumulateur d'énergie est formé par un ressort de pression (70) qui s'appuie avec l'une de ses extrémités sur la tête de soupape (38) et avec l'autre extrémité sur la cage de soupape (10).

7. Soupape de mise à l'air selon l'une quelconque des revendications 1 à 6, caractérisée en ce que l'orifice de sortie (22) débouche dans un élément filtrant qui est constitué de préférence de disques-tamis (74) individuels.
